# EUROPEAN PATENT APPLICATION

(11) **EP 2 544 401 A1**
(43) Date of publication of application: **09.01.2013**
(21) Application number: 11305896.0
(22) Date of filing: 08.07.2011
(51) Int. Cl.: H04L 12/24

(54) **Managing faults in a communication network based on statistical analysis**

(71) Applicant: Alcatel Lucent, 75007 Paris (FR)
(72) Inventor: Bennacer, Leila, 91620 Nozay (FR); Ciavaglia, Laurent, 91620 Nozay (FR)
(74) Representative: Benezeth, Philippe J.L. M.

(57) **Abstract**

The method comprises: monitoring the communication network for determining values taken over time by network variables; determining statistically significant links between the network variables according to the values taken over time by the network variables, the network variables and the statistically significant links forming a network variable graph; receiving an alert message indicating a faulty network variable; determining a cause network variable for the faulty network variable in the network variable graph.

## Description

### FIELD OF THE INVENTION

The present invention relates to the management of faults in communication networks.

### TERMINOLOGY

In the following description, the term "circuit" includes any hardware, or any software and hardware combination, for carrying out the function or functions of the circuit. In particular, the term "circuit" covers the case of a medium storing a computer program along with a processing unit for executing the computer program, as well as the case of a dedicated electrical or electronic circuitry.

In the following description, the term "computer" includes any hardware comprising at least one processing unit able to read and execute a computer program. A computer may be geographically localized as in the case of a personal computer, or geographically scattered as in the case of cloud processing.

### BACKGROUND

Three major techniques are used today to address the problem of fault management in a communication network.

The first technique uses a Markov chain method, in which the information about the occurrence of intermediate events in a fault-propagation chain is neglected.

The second technique uses a rule-based method, in which fixed or static rules are used.

The third technique uses Bayesian networks, in which the probability inference is a NP-hard problem.

### SUMMARY OF THE INVENTION

It has been found that there is a need for a method for rapidly detecting the cause of faults in a communication network, even in the case of fault propagation, with the method being applicable even in the case of a change in the communication network topology, in particular the addition of a node in the communication network.

Accordingly, it is proposed a method for managing faults in a communication network, comprising :
- monitoring the communication network for determining values taken over time by network variables,
- determining statistically significant links between the network variables according to the values taken over time by the network variables, the network variables and the statistically significant links forming a network variable graph,
- receiving an alert message indicating a faulty network variable,
- determining a cause network variable for the faulty network variable in the network variable graph.

In case of a change in the communication network topology, it is very easy to add a new network variable, because only the steps of monitoring the communication network and determining statistically significant links need to be achieved again.

Optionally, determining statistically significant links comprises determining an observed statistic for each two network variables and for each two values of the two network variables.

Optionally, the observed statistic comprises the number of times a same situation about the two values appear during monitoring.

Optionally, the observed statistic comprises the number of times the two values appear during the same period of time.

Optionally, determining the cause network variable comprises:
- determining network variables, called neighbor network variables, linked to the faulty network variable by a predetermined number of successive statistically significant links or less,
- determining the cause network variable amongst the neighbor network variables.

Optionally, determining the cause network variable comprises:
- retrieving the values of the neighbor network variables,
- selecting the neighbor network variables whose values have changed, the selected network variables being called possible cause network variables,
and determining the cause network variable amongst the neighbor network variables comprises:
- determining the cause network variable amongst the possible cause network variables.

Optionally, determining the cause network variable amongst the possible cause network variables comprises:
- determining, for each possible cause network variable, a cause index representing the chance that the possible cause network variable is the cause of the faulty network variable,
- determining the cause network variable according to the cause indexes.

Optionally, the method further comprises, after receiving the alert message:
- looking for a recording associating the faulty network variable with a cause network variable,
and determining the cause network variable is realized in case the recording is not found.

It is further proposed a program storage device readable by a machine, tangibly embodying a program of instructions executable by the machine to perform the following steps::
- monitoring a communication network for determining values taken over time by network variables,
- determining statistically significant links between the network variables according to the values taken over time by the network variables, the network variables and the statistically significant links forming a network variable graph,
- receiving an alert message indicating a faulty network variable,
- determining a cause network variable for the faulty network variable in the network variable graph.

It is further proposed a system for managing faults in a communication network, comprising :
- a circuit for monitoring the communication network for determining values taken over time by network variables,
- a circuit determining statistically significant links between the network variables according to the values taken over time by the network variables, the network variables and the statistically significant links forming a network variable graph,
- a circuit for receiving an alert message indicating a faulty network variable,
- a circuit for determining a cause network variable for the faulty network variable in the network variable graph.

### BRIEF DESCRIPTION OF THE FIGURES

Embodiments of the invention will now be described by way of example with reference to the following figures :
- figure 1 represents a communication architecture,
- figures 2A and 2B are diagrams of a method for managing faults in a communication network,
- figure 3 represents an example of evolution over time of values of network variables,
- figure 4 is a illustrates the determination of theoretical statistics from observed statistics,
- figure 5 is an example of network variable graph, and
- figure 6 is illustrates the determination of neighbor network variables in the network variable graph of figure 5.

### DESCRIPTION OF EMBODIMENTS

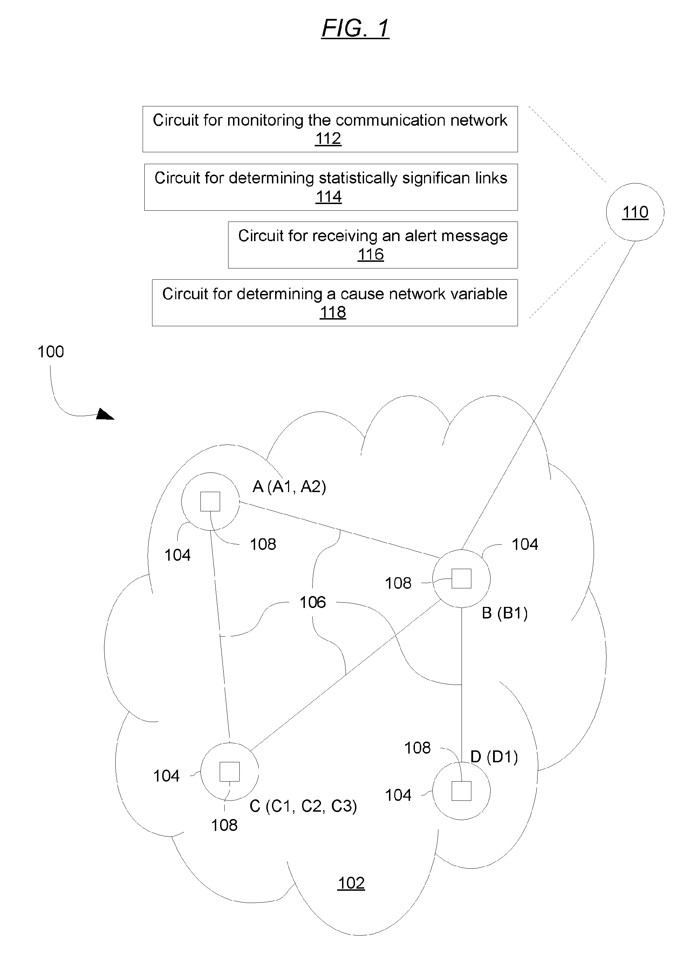

With reference to figure 1, a communication infrastructure 100 comprises a communication network 102, including nodes 104 and connections 106 between the nodes 104.

In the example of figure 1, the communication network 102 comprises four nodes called node A, node B, node C and node D.

Each node 104 comprises a circuit 108 for determining the values of one or several network variables relative to the node 104.

For example, circuit 108 of node A may be configured for determining the values of two network variables, called herein network variable A1 and network variable A2, relative to node A. Similarly, circuit 108 of node B may be configured for determining the value of one network variable, called herein network variable B1. Circuit 108 of node C may be configured for determining the values of three network variables, called herein network variable C1, network variable C2 and network variable C3. Circuit 108 of node C may be configured for determining the value of one network variable, called herein network variable D1.

In the described embodiment, each circuit 108 is further configured for sending the values of the network variables.

In the described embodiment, each circuit 108 is further configured for sending an alert message when the value of a network variable becomes different from a normal value.

The communication infrastructure 100 further comprises a system 110 for managing faults in the communication network 102. The fault managing system 110 is connected to the communication network.

The fault managing system 110 comprises a circuit 112 for monitoring the communication network 102 for determining the values taken over time by the network variables. For example, circuit 122 may be configured to interrogate the circuits 108 in order to obtain the values taken over time by the network variables.

The fault managing system 110 further comprises a circuit 114 for determining statistically significant links between the network variables according to the values taken over time by the network variables, the network variables and the statistically significant links forming a network variable graph.

The fault managing system 110 further comprises a circuit 116 for receiving an alert message indicating a faulty network variable.

For example, the alert message may be sent by the circuit 108 corresponding to the faulty network variable.

The fault managing system 110 further comprises a circuit 118 for determining a cause network variable for the faulty network variable in the network variable graph.

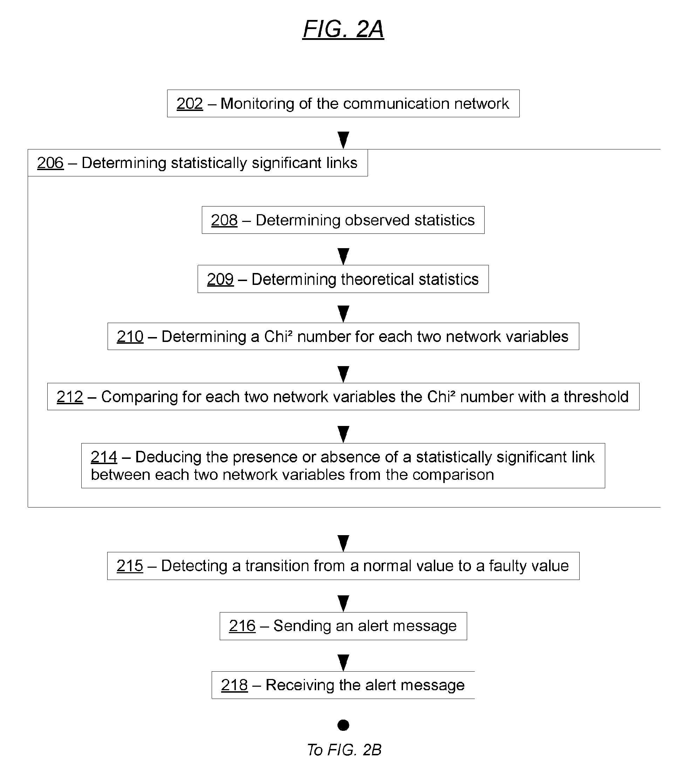

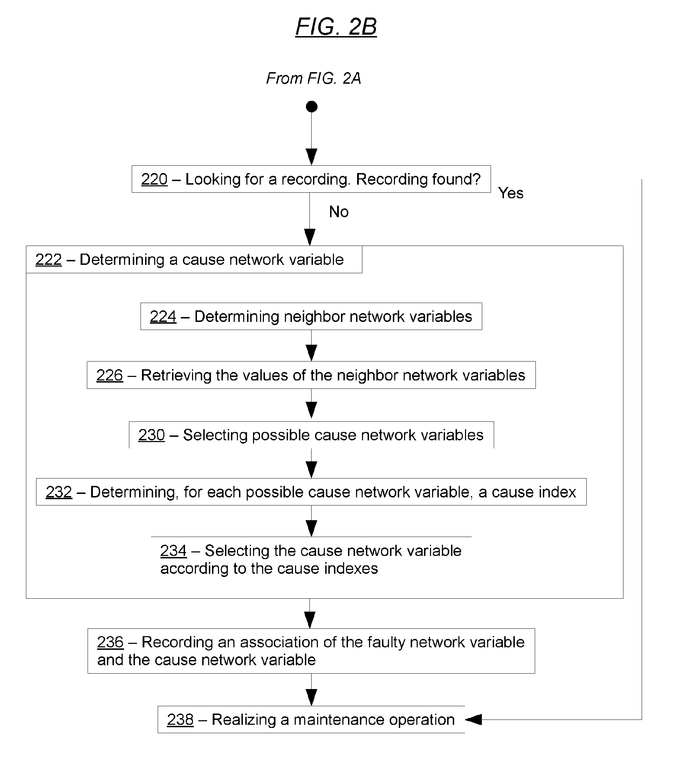

With reference to figures 2A and 2B, an exemplar method 200 for managing faults in a communication network, such as communication network 102 of figure 1, comprises the following steps.

The method 200 first comprises a step 202 during which the communication network is monitored for determining the values taken over time by network variables.

Step 202 is for example achieved by circuit 112 of system 110 of figure 1.

In the described example, each network variable represents a characteristic of a node of the communication network. For example, a network variable can represent one of the following: if the node is turned off or on, if some packets that should have been received by the node have been lost, the debit of data sent from the node.

If a network variable is based on a physical values that can take continuous values, a discrete number of values ranges are defined, and the values of the network variable corresponds to the defined ranges. In this way, the network variable only takes discrete values.

In the described example, the communication network is monitored during a predetermined period. Preferably, the predetermined period lasts at least one hour.

The method 200 further comprises a step 206 during which statistically significant links between network variables are determined according to the values taken over time by the network variables. Each statistically significant link links together two network variables.

Step 206 may for example be achieved by circuit 114 of the system 110 of figure 1.

In the described example, step 206 uses a Chi² test.

In the described example, step 206 first comprises a step 208 during which observed statistics are determined. More precisely, for each two network variables and for each two values of the two network variables, an observed statistic is determined.

In the described example, the observed statistic is the number of times a same situation about the two values of the two network variables appear during monitoring.

More precisely, in the described example, the observed statistic is the number of times the two values appear during the same period of time.

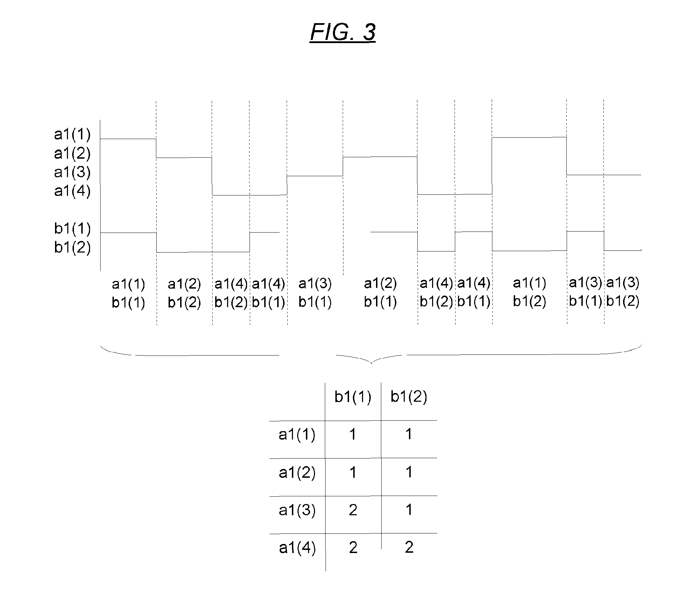

An example of determining observed statistics is illustrated on figure 3, where there is first shown the evolution over time of the value of two network variables: network variable A1 which value a1 can be equal to one amongst four possible values a1(1), a1(2), a1(3) and a1(4), and network variable B1 which value b1 can be equal to one amongst two possible values b1(1) and b1(2). There is also shown on figure 3 a table where the possible values of a1 form the lines and the possible values of b1 form the column. The table is populated with the observed statistics: the cell at the intersection of a value for a1 and a value for a2 contains the number of times these two values appear together. For example, the values a1(4) and b1(1) appear two times during the monitoring.

Back to figure 2, in the described example, step 206 further comprises a step 209 during which theoretical statistics are determined. More precisely, for each two network variables and for each two values of the two network variables, a theoretical statistic is determined from the observed statistics.

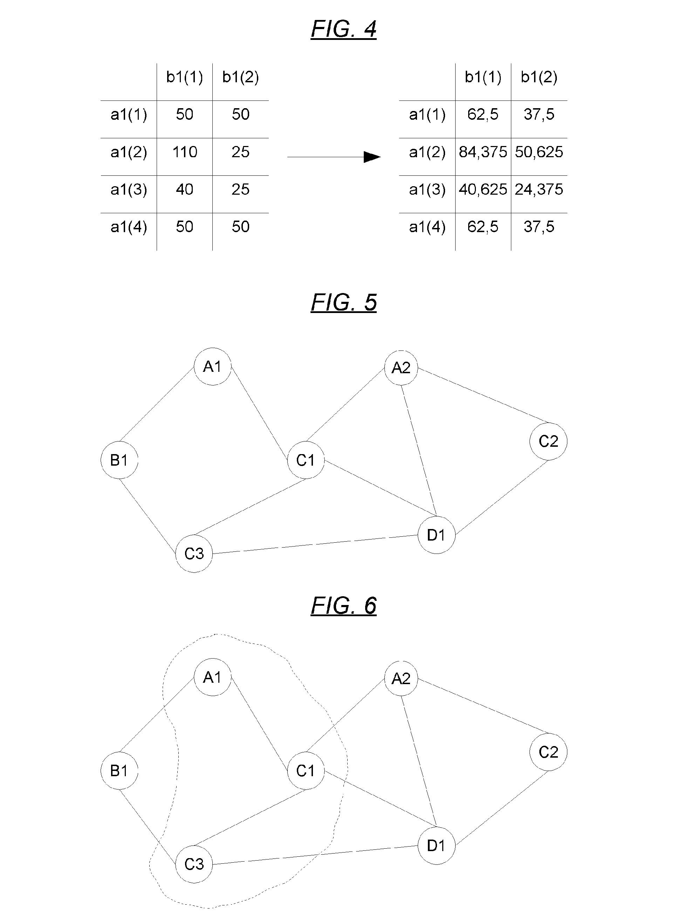

In the described example, the theoretical statistic is equal to the number of times the value of the first network variable appears for all the values of the second variable, multiplied by the number of times the value of the second network variable appears for all the values of the first variable, divided by the number of times all the values of both network variables appear. An example of determining theoretical statistics from observed statistics is illustrated on figure 4. A first table, similar to the one of figure 3, comprises the observed statistics and a second table comprises the theoretical statistics. From the first table, the theoretical statistic for the values a1(1) and b1(1) is equal to (50+50)*(50+110+40+50)/(50+50+110+25+40+25+50+50) = 100^{*}250/400 = 62,5. Similarly, the theoretical statistic for the values a1(3) and b1(2) is equal to (40+25)*(50+25+25+50)/(50+50+110+25+40+25+50+50) = 65*150/400 = 24, 375.

Back to figures 2A and 2B, in the described example, step 206 further comprises a step 210 during which, for each two network variables, a number, called herein Chi² number, is determined.

In the described example, the Chi² number is the sum over the possible two values for the two network variables of the squared difference between the observed statistic and the theoretical statistic, divided by the theoretical statistic.

For example, the Chi² number in the case illustrated on figure 4 would be given by:
Chi² = (50-62,5)²/62,5 + (50-37,5)²/37,5 + (110-84,375)²/84,375 + (25-50,625)²/50,625 + (40-40,625)²/40,625 + (25-24,375)²/24,375 + (50-62,5)²/62,5 + (50-37,5)²/37,5 = 34,11

Back to figure 2, in the described example, step 206 further comprises a step 212 during which, for each two network variables, the Chi² number of these two network variables is compared to a predetermined threshold, called herein theoretical Chi² number.

Preferably, the theoretical Chi² number is dependent on the number of degrees of freedom of the two network variable, which is equal to the number of possible values for the first network variable minus one multiplied by the number of possible values for the second network variable minus 1.

Preferably, the theoretical Chi² number is dependent of a predefined error margin. For example, the predefined error margin is equal to 5%.

For example, the number of degrees of freedom in the case illustrated on figure 4 is equal to (4-1)*(2-1)= 3. With a predetermined error margin of 5% and 3 degrees of freedom the theoretical Chi² number is equal to 7,82, which is smaller than the determined Chi² number.

Back to figures 2A and 2B, in the described example, step 206 further comprises a step 214 during which, for each two network variables, the presence or absence of a statistically significant link between the two network variables is deduced from the comparison. For example, the presence of a statistically significant link between the two network variables is determined if the Chi² number is higher than the threshold, and the absence of a statistically significant link between the two network variables is determined if the Chi² number is smaller than the threshold.

For example, in the case illustrated on figure 4, since the Chi² number is higher than the theoretical Chi² number, the presence of a statistically significant link between the two network variables is deduced.

The network variables and the statistically significant links form a network variable graph. Most of the time, several absences of statistically significant links will be deduced, so that the network variable graph will be incomplete in the sense that each network variable will not be linked to all other network variables.

An example of network variable graph is illustrated on figure 5, where network variables A1 and A2 are network variables of node A of the communication network of figure 1, network variable B1 is a network variable of node B of the communication network of figure 1, network variables C1, C2 and C3 are network variables of node C of the communication network of figure 1, and network variable D1 is a network variable of node D of the communication network of figure 1.

The network variable graph is a Bayesian network.

The method 200 further comprises a step 215 during which a transition from a normal value to a faulty value is detected for a network variable, called herein faulty network variable.

Which values of a network variable are "normal" and which are "faulty" is defined beforehand, for example by an operator of the communication network.

For example, the transition can be detected by circuit 108 of the corresponding node of figure 1.

The method 200 further comprises a step 216 during which an alert message is sent, the alert message indicating the faulty network variable and its value, ie the faulty value.

For example, the alert message can be sent by circuit 108 of the corresponding node of figure 1.

The method 200 further comprises a step 218 during which the alert message is received.

For example, the alert message can be received by circuit 116 of system 110 of figure 1.

The method goes on with steps for diagnosing the fault in the communication network, i.e. identifying a network variable which is the cause of the faulty value for the faulty network variable.

The method comprises a step 220 during which a recording associating the faulty network variable with a cause network variable is looked for.

If such a recording is found, the method 200 goes on to step 238.

If such a recording is not found, the method 200 goes on to step 222.

Step 222 may for example be achieved by circuit 116 of system 110 of figure 1.

The method 200 further comprises a step 222 during which a cause network variable for the faulty network variable is determined in the network variable graph. The cause network variable is the network variable that is believed to have caused the fault in the faulty network variable.

Step 222 may for example be achieved by circuit 118 of system 110 of figure 1.

In the described example, step 222 comprises a step 224 during which the network variables linked to the faulty network variables by a predetermined number of successive statistically significant links or less are determined. These network variables are called herein neighbor network variables. Because the network variable graph is most of the time incomplete, the number of neighbor network variables will often be small.

In the described example, the predetermined number is equal to two. This means that the neighbor network variables include the network variables directly linked to the faulty network variable, as well as the network variables linked to the faulty network variable through a directly linked network variable.

An example of determining neighbor network variables is illustrated on figure 6, where it is supposed that the faulty network variable is network variable B1, so that network variables A1 and C3 are direct or first-rank neighbor network variable, ie they are directly linked to the network variable B1, and network variable C1 is a second-rank neighbor variable, ie it is linked to network variable B1 trough a first-rank neighbor network variable (in this case both network variables A1 and C3).

Back to figure 2, in the described example, step 222 further comprises a step 226 during which the values of the neighbor network variables are retrieved.

In the described example, step 222 further comprises a step 228 during which the retrieved values of the neighbor network variables are compared to their normal values.

In the described example, step 222 further comprises a step 230 during which the neighbor network variables whose values have changed just before the occurrence of the faulty value, are selected. The selected network variables are called herein possible cause network variables. "Just before" means for example during a predetermined period of time preceding the passage from the normal value to the faulty value for the faulty network variable. The predetermined period of time extends for example from 1 to 60 seconds.

In the described example, step 222 further comprises a step 232 during which, for each possible cause network variable, a cause index representing the chance that the possible cause network variable is the cause of the faulty network variable, is determined from the value of the neighbor network variable.

The cause index is for example determined using one of the known methods of inference.

In the described example, the method of inference comprises the known step of message passing. Message passing is for example described in:
- "Feedback Message Passing for Inference in Gaussian Graphical Models" by Y Liu, V. Chandrasekaran, A. Anandkumar, and A. Willsky. In Proc. of IEEE ISIT, (Austin, USA), June 2010, or
- Jeremy Schiff, Dominic Antonelli, Alexandros G. Dimakis, David Chu, and Martin J. Wainwright. 2007. Robust message-passing for statistical inference in sensor networks. In Proceedings of the 6th international conference on Information processing in sensor networks (IPSN '07). ACM, New York, NY, USA, 109-118. DOI=10.1145/1236360.1236375 http://doi.acm.org/10.1145/1236360.1236375.

If the network variable graph (i.e. Bayesian network) comprises cycles, the step of message passing can be preceded by a known step of determining a "junction tree" to remove the cycles.

Of course, other known steps can be used in the method of inference, in particular instead of the step of message passing.

Because the number of neighbor is often small and because that number is still refined at step 230, step 232 will often be achieved quite rapidly and/or with limited processing resources.

In the described example, step 222 further comprises a step 234 during which a cause network variable is selected, according to the cause indexes, amongst the possible cause network variables.

In the described example, the possible cause network variable having the highest cause indexes is selected as the cause network variable.

The cause network variable being identified, this is the end of the fault diagnosis steps.

The method 200 further comprises a step 236 during which a recording associating the faulty network variable and its faulty value with the cause network variable and its value is recorded.

The method 200 further comprises a step 238 during which a maintenance operation is realized on the communication network, for example in order to fix the element of communication network associated with the cause network variable.

The present invention is not limited to the embodiments previously described, but instead defined by the appended claims. It will in fact be apparent to the one skilled in the art that modifications can be applied to the embodiments previously described.

Furthermore, the terms used in the appended claims shall not be understood as limited to the elements of the embodiments previously described, but on the contrary shall be understood as including all equivalent elements that the one skilled in the art is able to derive using their general knowledge.

## Claims

1. Method for managing faults in a communication network, comprising :
- monitoring (202) the communication network for determining values taken over time by network variables,
- determining (206) statistically significant links between the network variables according to the values taken over time by the network variables, the network variables and the statistically significant links forming a network variable graph,
- receiving (218) an alert message indicating a faulty network variable,
- determining (222) a cause network variable for the faulty network variable in the network variable graph.

2. Method according to claim 1, wherein determining (206) statistically significant links comprises determining (208) an observed statistic for each two network variables and for each two values of the two network variables.

3. Method according to claim 2, wherein the observed statistic comprises the number of times a same situation about the two values appear during monitoring.

4. Method according to claim 3, wherein the observed statistic comprises the number of times the two values appear during the same period of time.

5. Method according to any one of claims 1 to 4, wherein determining (222) the cause network variable comprises:
- determining (224) network variables, called neighbor network variables, linked to the faulty network variable by a predetermined number of successive statistically significant links or less,
- determining (234) the cause network variable amongst the neighbor network variables.

6. Method according to claim 5, wherein determining the cause network variable comprises:
- retrieving (226) the values of the neighbor network variables,
- selecting (230) the neighbor network variables whose values have changed, the selected network variables being called possible cause network variables,
and wherein determining the cause network variable amongst the neighbor network variables comprises:
- determining (234) the cause network variable amongst the possible cause network variables.

7. Method according to claim 6, wherein determining the cause network variable amongst the possible cause network variables comprises:
- determining (232), for each possible cause network variable, a cause index representing the chance that the possible cause network variable is the cause of the faulty network variable,
- determining (234) the cause network variable according to the cause indexes.

8. Method according to any one of claims 1 to 7, further comprising, after receiving the alert message:
- looking (220) for a recording associating the faulty network variable with a cause network variable,
and wherein determining (222) the cause network variable is realized in case the recording is not found.

9. A program storage device readable by a machine, tangibly embodying a program of instructions executable by the machine to perform the following steps:
- monitoring a communication network for determining values taken over time by network variables,
- determining statistically significant links between the network variables according to the values taken over time by the network variables, the network variables and the statistically significant links forming a network variable graph,
- receiving an alert message indicating a faulty network variable,
- determining a cause network variable for the faulty network variable in the network variable graph.

10. System for managing faults in a communication network, comprising :
- a circuit (112) for monitoring the communication network for determining values taken over time by network variables,
- a circuit (114) for determining statistically significant links between the network variables according to the values taken over time by the network variables, the network variables and the statistically significant links forming a network variable graph,
- a circuit (116) for receiving an alert message indicating a faulty network variable,
- a circuit (118) for determining a cause network variable for the faulty network variable in the network variable graph.

## Amended claims

### Amended claims in accordance with Rule 137(2) EPC.

**1.** Method for managing faults in a communication network, comprising :
- monitoring (202) the communication network for determining values taken over time by network variables,
- determining (206) statistically significant links between the network variables according to the values taken over time by the network variables, the network variables and the statistically significant links forming a network variable graph,
- receiving (218) an alert message indicating a faulty network variable which is a network variable for which a transition from a normal value to a faulty value is detected,
- determining (222) a cause network variable for the faulty network variable in the network variable graph, the cause network variable being the network variable which is the cause of the faulty value of the faulty network variable, wherein determining (222) the cause network variable comprises:
- determining (224) network variables, called neighbor network variables, linked to the faulty network variable by a predetermined number of successive statistically significant links or less,
- determining (234) the cause network variable amongst the neighbor network variables.

**2.** Method according to claim 1, wherein determining (206) statistically significant links comprises determining (208) an observed statistic for each two network variables and for each two values of the two network variables.

**3.** Method according to claim 2, wherein the observed statistic comprises the number of times a same situation about the two values appear during monitoring.

**4.** Method according to claim 3, wherein the observed statistic comprises the number of times the two values appear during the same period of time.

**5.** Method according to any one of claims 1 to 4, wherein determining the cause network variable comprises:
- retrieving (226) the values of the neighbor network variables,
- selecting (230) the neighbor network variables whose values have changed, the selected network variables being called possible cause network variables,
and wherein determining the cause network variable amongst the neighbor network variables comprises:
- determining (234) the cause network variable amongst the possible cause network variables.

**6.** Method according to claim 5, wherein determining the cause network variable amongst the possible cause network variables comprises:
- determining (232), for each possible cause network variable, a cause index representing the chance that the possible cause network variable is the cause of the faulty network variable,
- determining (234) the cause network variable according to the cause indexes.

**7.** Method according to any one of claims 1 to 6, further comprising, after receiving the alert message:
- looking (220) for a recording associating the faulty network variable with a cause network variable,
and wherein determining (222) the cause network variable is realized in case the recording is not found.

**8.** A program storage device readable by a machine, said program storage device comprising a program of instructions which, when executed by the machine, cause the machine to perform the following steps:
- monitoring a communication network for determining values taken over time by network variables,
- determining statistically significant links between the network variables according to the values taken over time by the network variables, the network variables and the statistically significant links forming a network variable graph,
- receiving an alert message indicating a faulty network variable which is a network variable for which a transition from a normal value to a faulty value is detected,
- determining a cause network variable for the faulty network variable in the network variable graph, the cause network variable being the network variable which is the cause of the faulty value of the faulty network variable, wherein determining (222) the cause network variable comprises:
- determining (224) network variables, called neighbor network variables, linked to the faulty network variable by a predetermined number of successive statistically significant links or less,
- determining (234) the cause network variable amongst the neighbor network variables.

**9.** System for managing faults in a communication network, comprising :
- a circuit (112) for monitoring the communication network for determining values taken over time by network variables,
- a circuit (114) for determining statistically significant links between the network variables according to the values taken over time by the network variables, the network variables and the statistically significant links forming a network variable graph,
- a circuit (116) for receiving an alert message indicating a faulty network variable which is a network variable for which a transition from a normal value to a faulty value is detected,
- a circuit (118) for determining a cause network variable for the faulty network variable in the network variable graph, the cause network variable being the network variable which is the cause of the faulty value of the faulty network variable, wherein determining the cause network variable comprises:
- determining network variables, called neighbor network variables, linked to the faulty network variable by a predetermined number of successive statistically significant links or less,
- determining the cause network variable amongst the neighbor network variables.
